# EUROPÄISCHE PATENTANMELDUNG

(11) **EP 1 050 515 A2**
(43) Veröffentlichungstag der Anmeldung: **08.11.2000**
(21) Anmeldenummer: 00109555.3
(22) Anmeldetag: 04.05.2000
(51) Int. Cl.: C03B 29/00, C03B 29/02

(54) **Feuerpolieren von Bleiglas**

(30) Priorität: 07.05.1999 DE 19921267; 11.06.1999 DE 1992685
(71) Anmelder: Linde Technische Gase GmbH, 82049 Höllriegelskreuth (DE)
(72) Erfinder: Schöne, Holger, Dipl.-Ing., 85579 Neubiberg (DE)
(74) Vertreter: Gellner, Bernd, Dr.

(57) **Zusammenfassung**

Die Erfindung betrifft ein Verfahren zum Feuerpolieren eines Glasteils, insbesondere aus Bleikristall, bei dem zumindest ein Teil der Oberfläche des Glasteils mit der Flamme eines Brenners, dem ein Gasgemisch aus einem Brenngas und einem sauerstoffhaltigen Gas zugeführt wird, erhitzt und aufgeschmolzen wird. Der Brenner wird so ausgerichtet, daß der Winkel zwischen der Flamme und dem Teil der Oberfläche zwischen 60° und 120°, bevorzugt zwischen 75° und 105°, besonders bevorzugt im wesentlichen 90° beträgt.

## Beschreibung

Die Erfindung betrifft ein Verfahren zum Feuerpolieren eines Glasteils, insbesondere aus Bleikristall, bei dem zumindest ein Teil der Oberfläche des Glasteils mit der Flamme eines Brenners, dem ein Gasgemisch aus einem Brenngas und einem sauerstoffhaltigen Gas zugeführt wird, erhitzt und aufgeschmolzen wird.

Bleigläser und Bleikristallgläser müssen nach dem Preßformen zur Entfernung von Graten und anderen Oberflächendefekten nachgearbeitet werden. Hierzu werden diese bisher meist einer Mischung aus Fluß- und Schwefelsäure ausgesetzt. In dem Säurebad wird die oberste Schicht der Gläser abgetragen und so das Glas auf Hochglanz gebracht Problematisch an diesem Verfahren sind allerdings die bei der Säurepolitur entstehenden giftigen Emissionen sowie die mit Blei, Arsen und Antimon verunreinigten Säurereste, welche eine beträchtliche Umweltbelastung verursachen.

In der EP 0 136 934 wird daher ein Verfahren zum säurefreien Polieren von Glasoberflächen mittels eines Brenners vorgeschlagen. Hierzu wird ein außenmischender Sauerstoff-Wasserstoff-Brenner, d.h. ein Brenner, dem der Sauerstoff und der Wasserstoff getrennt zugeführt werden, verwendet, mit dessen Hilfe die Glasoberfläche aufgeschmolzen wird. Der außenmischende Brenner erzeugt jedoch nur eine weiche Flamme, die in Ecken, Löcher oder Vertiefungen auf der Glasoberfläche nicht eindringen kann. Mit dieser Feuerpolitur wird daher nur an den leicht zugänglichen Bereichen der Glasoberfläche ein zufriedenstellendes Ergebnis erzielt. Durch längere Erwärmung des Glases ist es zwar möglich, mit einem außenmischenden Brenner Grate oder Oberflächendefekte auch in Ecken und Löchern zu beseitigen, jedoch besteht dabei die Gefahr, daß das Glas aufgrund der langen Erwärmung in sich zusammenfällt.

Aus der US 3,188,190 ist ein Verfahren zum Feuerpolieren von preßblasgeformten Flaschen mittels eines vormischenden Brenngas-Sauerstoff-Brenners bekannt. Bei nach diesem Verfahren gefertigten Flaschen ist es lediglich notwendig, Grate am Flaschenmund zu entfernen. Hierzu werden die aus dem Brennerkopf austretenden Flammen von oben auf die Flasche gerichtet, so daß die Glasoberfläche im Bereich des Flaschenmundes durch die streifend einfallenden Flammen aufgeschmolzen wird. Diese Vorgehensweise ist jedoch nicht dazu geeignet, einen größeren Oberflächenbereich, welcher Vertiefungen oder andere Unregelmäßigkeiten aufweist, aufzuschmelzen, da hierzu eine lange und starke Erwärmung der Flasche notwendig wäre, wodurch die Flasche in sich zusammenfallen würde.

Aufgabe vorliegender Erfindung ist es daher, ein Verfahren der eingangs genannten Art aufzuzeigen, mit dem eine gute Politur des Glasteils und eine hohe Oberflächenqualität auch an schwer zugänglichen Stellen erzielt wird.

Diese Aufgabe wird erfindungsgemäß dadurch gelöst, daß der Winkel zwischen der Flamme und dem Teil der Oberfläche zwischen 60° und 120°, bevorzugt zwischen 75° und 105°, besonders bevorzugt im wesentlichen 90° beträgt.

In umfangreichen Untersuchungen hat sich gezeigt, daß die Art und die Orientierung der Flammen bei der Feuerpolitur von Glasteilen, insbesondere von solchen mit unregelmäßigen Oberflächen, die wesentlichen Faktoren sind. Bei dem erfindungsgemäß verwendeten vormischenden Brenner werden ein Brenngas und ein sauerstoffhaltiges Gas vorgemischt und als Gasgemisch dem Brennerkopf zugeführt. Im Vergleich zu einem außenmischenden Brenner, bei dem getrennte Leitungen für das Brenngas und das sauerstoffhaltige Gas zum Brennerkopf vorgesehen sind, wird mit einem vormischenden Brenner eine sehr viel härtere Flamme erzielt. Diese kann auch in Löcher, Unebenheiten, Vertiefungen, Kanten oder sonstige Unregelmäßigkeiten der Glasoberfläche vordringen und dort das Glasteil polieren. Die härtere Flamme hat zudem den Vorteil, daß die Wärmeübertragung auf das Glasteil in höherem Maße durch Konvektion erfolgt, welche, im Gegensatz zur Wärmeübertragung durch Strahlung, im wesentlichen nur auf die Glasoberfläche und nicht auf das gesamte Glasteil einwirkt. Eine unerwünschte Erwärmung des Glasteils, die zu Verformungen des Glasteils führen kann, wird vermieden.

Neben der Wahl einer harten Flamme ist es genauso wichtig, die Flamme möglichst senkrecht, zumindest aber unter einem Winkel von 60° bis 120°, besser unter einem Winkel von 75° bis 105°, zu dem Teil der Oberfläche des Glasteils auszurichten, welcher von der Flamme poliert werden soll. Hierdurch wird eine sehr effektive Bearbeitung der Glasoberfläche bei geringer Wärmebelastung des Glasteils erreicht und auch schwer zugängliche Stellen der Glasoberfläche können mit hoher Qualität poliert werden, ohne daß sich die Form des Glasteils aufgrund zu starker Erhitzung verändert.

Von Vorteil werden auf die Glasoberfläche mehrere Flammen gerichtet, wobei jede der Flammen mit dem entsprechenden Teil der Oberfläche, auf welches sie gerichtet ist, die erfindungsgemäße Winkelrelation erfüllt. Die einzelnen Flammen werden also entsprechend der Form der zu polierenden Glasoberfläche ausgerichtet.

Vorzugsweise wird zum Aufschmelzen der Oberfläche ein Leistenbrenner verwendet. Leistenbrenner besitzen eine Vielzahl im wesentlichen linear angeordneter Bohrungen, aus denen das Gemisch aus Brenngas und sauerstoffhaltigem Gas austritt. Die Leistenbrenner sind mit 50 bis 1000, bevorzugt mit 100 bis 200, Bohrungen pro Leiste versehen. Bei außenmischenden Leistenbrennern, bei denen das sauerstoffhaltige Gas und das Brenngas aus separaten Bohrungen austreten, tritt das Problem auf, daß bei einer Verstopfung einer der Bohrungen, beispielsweise einer Öffnung für das sauerstoffhaltige Gas, das Glasteil an dieser Stelle nur mit dem Brenngas bzw. mit einem Überschuß an Brenngas erhitzt wird. Da ein Brenngasüberschuß aber zum Beispiel bei Bleigläsern reduzierend wirkt und die Qualität des Glasteils nachteilig beeinflußt, muß die Sauerstoffmenge entsprechend erhöht werden. Dies hat zur Folge, daß alle anderen Flammen des Leistenbrenners mit entsprechendem Sauerstoffüberschuß brennen, d.h. das ursprünglich eingestellte optimale Sauerstoff-Brenngas-Verhältnis kann nicht aufrechterhalten werden.

Bei der Verwendung vormischender Leistenbrenner bleibt dagegen auch bei einer Verstopfung einzelner Bohrungen das Sauerstoff-Brenngas-Verhältnis jeder einzelnen Flamme gleich. Veränderungen an dem Glasteil, wie sie beispielsweise durch reduzierend wirkende Flammen hervorgerufen werden können, sind ausgeschlossen.

Als Brenner haben sich sowohl Brenner, die mit Wasserstoff und einem sauerstoffhaltigen Gas, als auch solche, die mit einem kohlenwasserstoffhaltigen Gas, insbesondere Erdgas, und einem sauerstoffhaltigen Gas betrieben werden, bewährt. Wasserstoff-Sauerstoff-Brenner haben den Vorteil eines effektiveren Aufschmelzens der Oberfläche, aus Kosten- und Sicherheitsgründen werden dagegen Erdgas-Sauerstoff-Brenner bevorzugt.

Eine möglichst gleichmäßige Erhitzung und Bearbeitung des Glasteils wird vorzugsweise dadurch erzielt, daß das Glasteil während des Erhitzens gedreht wird. Dadurch werden zum einen die ungieichmäßige Verteilung der Flammen des oder der Brenner über der Oberfläche des Glasteils, zum anderen Intensitätsunterschiede einzelner Flammen ausgeglichen.

Von Vorteil wird in einem Arbeitsgang im wesentlichen die gesamte äußere Oberfläche und/oder die gesamte innere Oberfläche eines zumindest teilweise hohlen Glasteils feuerpoliert. Die Oberfläche des Glasteils wird dabei mittels des Brenners gleichmäßig erhitzt. Aufgrund der harten Flamme des vormischenden Brenners ist es nicht mehr notwendig, schwer zugängliche Stellen auf dem Glasteil länger als die restliche Oberfläche zu erhitzen. Es hat sich gezeigt, daß durch dieses Vorgehen die gesamte Oberfläche des Glasteils aufgeschmolzen werden kann, ohne daß das Glasteil seine Form verliert oder in sich zusammenfällt.

Besonders günstig ist es, wenn bei einem hohlen Glasteil gleichzeitig die innere und die äußere Oberfläche oder Teile von diesen Oberflächen erhitzt und aufgeschmolzen werden. So kann in einem einzigen Arbeitsgang das gesamte Glasteil feuerpoliert werden.

Bei Tests hat sich herausgestellt daß die Einwirkzeit der Flammen des Brenners auf das Glasteil vorzugsweise zwischen 10 und 60 Sekunden, besonders bevorzugt zwischen 20 und 50 Sekunden, liegt. Innerhalb dieser Zeitspannen wird ein ausreichendes Aufschmelzen der obersten Glasschichten, durch welches Grate und Oberflächendefekte beseitigt werden, erreicht, ohne daß Verformungen des Glasteils. auftreten.

Insbesondere ist das erfindungsgemäße Verfahren bei der Feuerpolitur von dickwandigen und/oder preßgeformten Glasteilen, insbesondere mit Wandstärken zwischen 5 und 20 mm, bevorzugt zwischen 7 und 20 mm, von Vorteil.

Bisher ist man davon ausgegangen, daß die Temperatur des Kühlmittels möglichst niedrig zu wählen ist, um einen entsprechend hohen Wärmetransfer vom Brenner auf das Kühlmittel zu erzielen. Es hat sich jedoch gezeigt, daß bei Kühlmitteltemperaturen unter 40°C Wasserdampf am Brennerkopf kondensieren und das dabei entstehende Kondensat auf das heiße Glasteil tropfen und dieses beschädigen kann. Vorzugsweise wird daher der Brenner mit einem Kühlmittel, welches eine Temperatur von mehr als 40°C, bevorzugt eine Temperatur zwischen 40°C und 60°C, aufweist, gekühlt. Als Kühlmittel für den Brenner hat sich insbesondere Wasser bewährt.

Zudem hat es sich als günstig erwiesen, das Glasteil während des Aufschmelzens mittels eines Luftstromes zu kühlen. Beispielsweise ist es vorteilhaft, das Innere eines hohlen Glasteils mit Kühlluft zu spülen, während die äußere Oberfläche des Glasteils erfindungsgemäß aufgeschmolzen wird. Formänderungen des Glasteils während des Feuerpolierens können so nahezu ausgeschlossen werden.

Es hat sich weiter gezeigt, daß es vorteilhaft ist, wenn unmittelbar nach einer Unterbrechung der Brenngas-Sauerstoff- oder Wasserstoff-Sauerstoff-Zufuhr zu dem Brenner dem Brenner ein Inert- oder Spülgas zugeführt wird. Durch das Spülen des Brenners wird auch das Glasteil, nachdem die Oberfläche aufgeschmolzen ist, mit dem Inert- oder Spülgas umflutet und dadurch gleichmäßig abgekühlt. Auf diese Weise ist es gelungen, das Glas soweit abzukühlen, um es deformationsfrei mit einem Greifer oder Sauger transportieren zu können.

Als Inert- bzw. Spülgas, welches dem Brenner unmittelbar nach einer Unterbrechung der Brenngas-Sauerstoff- oder Wasserstoff-Sauerstoff-Zufuhr zugeführt wird, hat sich ein stickstoffhaltiges Gas, insbesondere reiner Stickstoff, als günstig erwiesen, da dieser weder eine Reaktion mit dem Brenngas oder dem Wasserstoff noch mit dem Glas eingeht.

## Patentansprüche

1. Verfahren zum Feuerpolieren eines Glasteils, insbesondere aus Bleikristall, bei dem zumindest ein Teil der Oberfläche des Glasteils mit der Flamme eines Brenners, dem ein Gasgemisch aus einem Brenngas und einem sauerstoffhaltigen Gas zugeführt wird, erhitzt und aufgeschmolzen wird, **dadurch gekennzeichnet,** daß der Winkel zwischen der Flamme und dem Teil der Oberfläche zwischen 60° und 120°, bevorzugt zwischen 75° und 105°, besonders bevorzugt im wesentlichen 90° beträgt

2. Verfahren nach Anspruch 1, dadurch gekennzeichnet, daß die Oberfläche mit mehreren Flammen erhitzt wird und der Winkel zwischen jeder einzelnen Flamme und dem Teil der Oberfläche, der von der jeweiligen Flamme erhitzt wird, zwischen 60° und 120°, bevorzugt zwischen 75° und 105°, besonders bevorzugt im wesentlichen 90° beträgt.

3. Verfahren nach einem der Ansprüche 1 oder 2, dadurch gekennzeichnet, daß die Oberfläche mit einem Leistenbrenner aufgeschmolzen wird.

4. Verfahren nach einem der Ansprüche 1 bis 3, dadurch gekennzeichnet, daß dem Brenner ein Gasgemisch aus Wasserstoff und einem sauerstoffhaltigen Gas oder aus einem kohlenwasserstoffhaltigen Gas und einem sauerstoffhaltigen Gas zugeführt wird.

5. Verfahren nach einem der Ansprüche 1 bis 4, dadurch gekennzeichnet, daß das Glasteil während des Erhitzens gedreht wird.

6. Verfahren nach einem der Ansprüche 1 bis 5, dadurch gekennzeichnet, daß im wesentlichen die gesamte innere und/oder äußere Oberfläche eines hohlen Glasteils aufgeschmolzen werden.

7. Verfahren nach einem der Ansprüche 1 bis 6, dadurch gekennzeichnet, daß gleichzeitig die innere und die äußere Oberfläche eines hohlen Glasteils aufgeschmolzen werden.

8. Verfahren nach einem der Ansprüche 1 bis 7, dadurch gekennzeichnet, daß die Oberfläche zwischen 10 und 60 Sekunden erhitzt wird.

9. Verfahren nach einem der Ansprüche 1 bis 8, dadurch gekennzeichnet, daß ein preßgeformtes und/oder dickwandiges Glasteil feuerpoliert wird.

10. Verfahren nach Anspruch 9, dadurch gekennzeichnet, daß ein Glasteil mit einer Wandstärke zwischen 5 und 20 mm, insbesondere zwischen 7 und 20 mm feuerpoliert wird.

11. Verfahren nach einem der Ansprüche 1 bis 10, dadurch gekennzeichnet, daß der Brenner mit einem Kühlmittel, insbesondere Wasser, mit einer Temperatur von mehr als 40°C, bevorzugt zwischen 40 und 60°C, gekühlt wird.

12. Verfahren nach einem der Ansprüche 1 bis 11, dadurch gekennzeichnet, daß das Glasteil während des Feuerpolierens mittels eines Luftstromes gekühlt wird.

13. Verfahren nach einem der Ansprüche 1 bis 12, dadurch gekennzeichnet, daß unmittelbar nach einer Unterbrechung der Gasgemisch-Zufuhr zu dem Brenner dem Brenner ein Inert- oder Spülgas zugeführt wird.

14. Verfahren nach Anspruch 13, dadurch gekennzeichnet, daß dem Brenner als Inert- oder Spülgas ein stickstoffhaltiges Gas zugeführt wird.
